# EUROPEAN PATENT APPLICATION

(11) **EP 2 489 858 A2**
(43) Date of publication of application: **22.08.2012**
(21) Application number: 12155671.6
(22) Date of filing: 15.02.2012
(51) Int. Cl.: F02C 7/36

(54) **Gas turbine engine generator system with torsional damping coupling**

(30) Priority: 21.02.2011 US 201113031287
(71) Applicant: General Electric Company, Schenectady, NY 12345 (US)
(72) Inventor: Snook, Daniel David, Greenville, SC South Carolina 29615 (US); Sommerlatte, Klaus Werner, Schenectady, NY New York 12345 (US)
(74) Representative: Cleary, Fidelma

(57) **Abstract**

The present application and the resultant patent provide a gas turbine engine generator system (100). The gas turbine engine generator system (100) may include a turbine (130), a generator (150), and a shaft (140). The turbine (130) drives the generator (150) via the shaft (140). A torsional damping coupling (160) may be positioned about the shaft (140) so as to limit the transmission of torque to the turbine (130) during a generator based fault event.

## Description

### TECHNICAL FIELD

The present application relates generally to gas turbine engines and more particularly relates to the use of a torsional damping coupling between a gas turbine engine and a generator to protect the gas turbine engine from generator based fault events.

### BACKGROUND OF THE INVENTION

Gas turbine engines and other types of turbo-machinery are often used to drive loads such as electrical generators. Gas turbines are designed to withstand certain levels of generator based fault events without damage. Such fault events may be defmed as out-of-phase synchronizing, short circuits, and the like. Fault events may transmit high torques at high oscillation rates from the generator to the turbine. Generally described, a turbine may be designed to tolerate minor fault events without permanent damage and to tolerate major fault events without failure of the turbine. These fault design requirements, however, may increase the overall size, cost, and weight of the turbine.

Shear couplings have been used in the past in attempts to protect the gas turbine engine from generator based fault events. Shear couplings, however, generally do not provide any benefit during minor fault events and generally require replacement after a major fault event. As such, shear couplings may be of limited effectiveness and long term value.

There is thus a desire for systems and methods for the protection and/or response of a gas turbine engine from generator based fault events. Such improved systems and methods preferably would substantially isolate the gas turbine engine from such fault events and thus permit a reduction in current turbine fault design requirements and costs.

### SUMMARY OF THE INVENTION

The present invention resides in a gas turbine engine generator system including a turbine, a generator, and a shaft. The turbine drives the generator via the shaft. A torsional damping coupling may be positioned about the shaft so as to limit the transmission of torque to the turbine during a generator based fault event.

The present invention resides in a method of operating a gas turbine engine generator system including the steps of positioning a torsional damping coupling about a shaft between a generator and a turbine, driving the generator by the turbine via the shaft, generating torque in the generator during a fault event, and damping a transmission of torque from the generator to the turbine by the torsional damping coupling.

These and other features and improvements of the present application will become apparent to one of ordinary skill in the art upon review of the following detailed description when taken in conjunction with the several drawings and the appended claims.

### BRIEF DESCRIPTION OF THE DRAWINGS

Embodiments of the present invention will now be described, by way of example only, with reference to the accompanying drawings in which:
Fig. 1 is a schematic view of a known gas turbine engine.
Fig. 2 is a schematic view of a gas turbine engine generator system with a torsional damping coupling as may be described herein.
Fig. 3 is a side cross-sectional view of the torsional damping coupling of Fig. 2.
Fig. 4 is a partial top plan view of the torsional damping coupling of Fig. 2.

### DETAILED DESCRIPTION

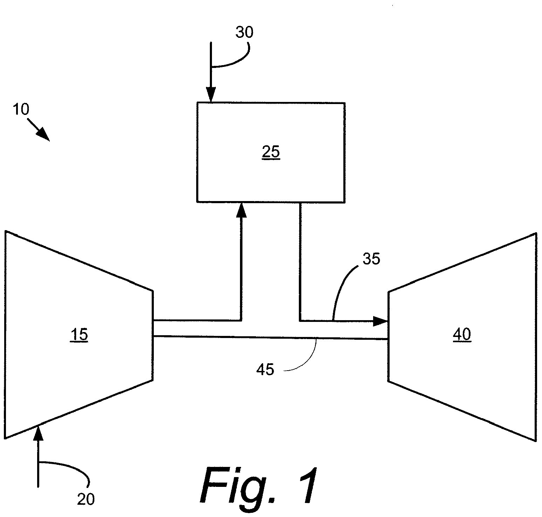

Referring now to the drawings, in which like numerals refer to like elements throughout the several views, Fig. 1 shows a schematic view of gas turbine engine 10 as may be used herein. The gas turbine engine 10 may include a compressor 15. The compressor 15 compresses an incoming flow of air 20. The compressor delivers the compressed flow of air 20 to a combustor 25. The combustor 25 mixes the compressed flow of air 20 with a compressed flow of fuel 30 and ignites the mixture to create a flow of combustion gases 35. Although only a single combustor 25 is shown, the gas turbine engine 10 may include any number of combustors 25. The flow of combustion gases 35 is in turn delivered to a downstream turbine 40. The flow of combustion gases 35 drives the turbine 40 so as to produce mechanical work. The mechanical work produced in the turbine 40 drives the compressor 15 via a shaft 45 and an external load such as an electrical generator and the like as will be described in more detail below.

The gas turbine engine 10 may use natural gas, various types of syngas, and/or other types of fuels. The gas turbine engine 10 may be anyone of a number of different gas turbine engines offered by General Electric Company of Schenectady, New York and the like. The gas turbine engine 10 may have different configurations and may use other types of components. Other types of gas turbine engines also may be used herein. Multiple gas turbine engines, other types of turbines, and other types of power generation equipment also may be used herein together.

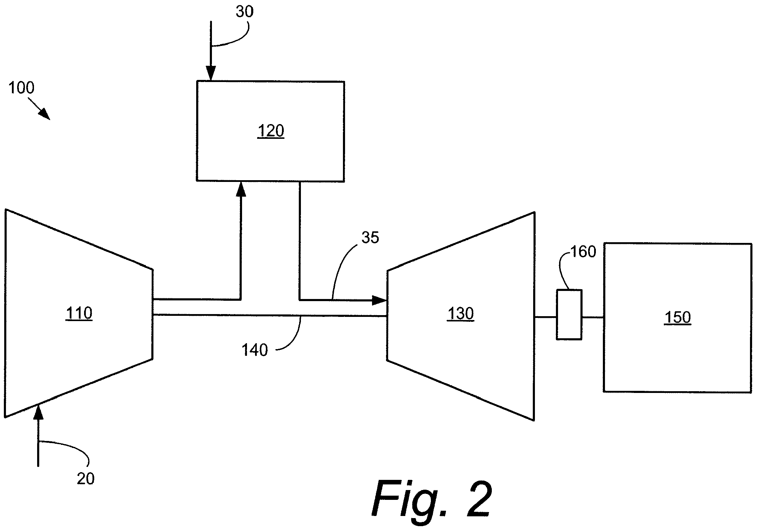

Fig. 2 shows a gas turbine engine generator system 100 as may be described herein. The gas turbine engine generator system 100 largely includes the gas turbine engine 10 described above with a compressor 110, a combustor 120, a turbine 130, a shaft 140, and other components. The gas turbine engine generator system 100 also includes a generator 150 or a similar type of load. The generator 150 may be any type of device for the generation of electrical power. The generator 150 may be driven by the turbine 130 via the shaft 140. Other components and other configurations may be used herein.

The gas turbine engine generator system 100 also may include a torsional damping coupling 160 positioned about the shaft 140. The torsional damping coupling 160 may slow the response of the turbine 130 to torque applied by the generator 150 during a fault event. Such fault events typically oscillate at grid frequency and may abate quickly, generally within several seconds. As such, even a relatively short response lag between the generator 150 and the turbine 130 provided by the torsional damping coupling 160 may result in reduced response torque in the turbine 130 and the damage caused thereby.

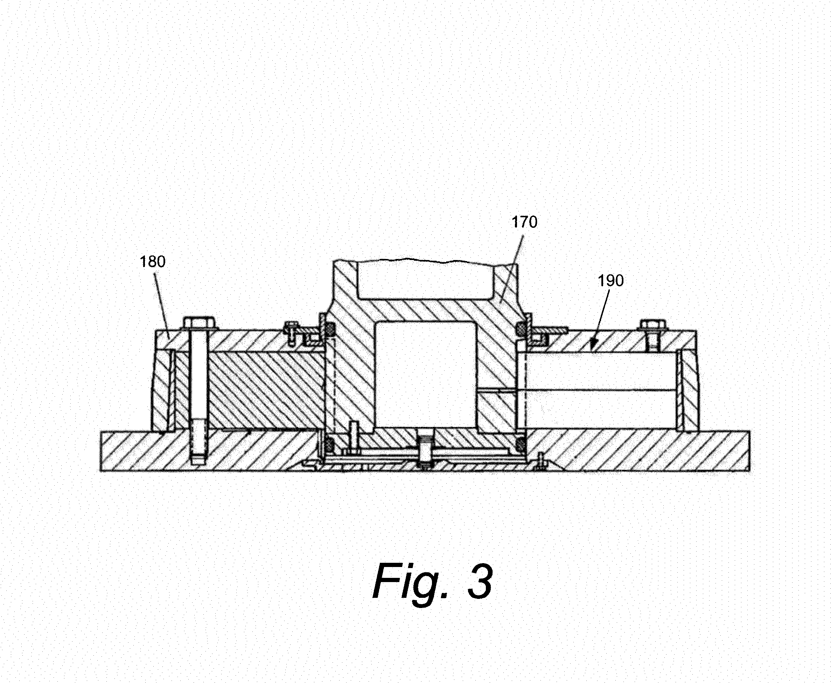

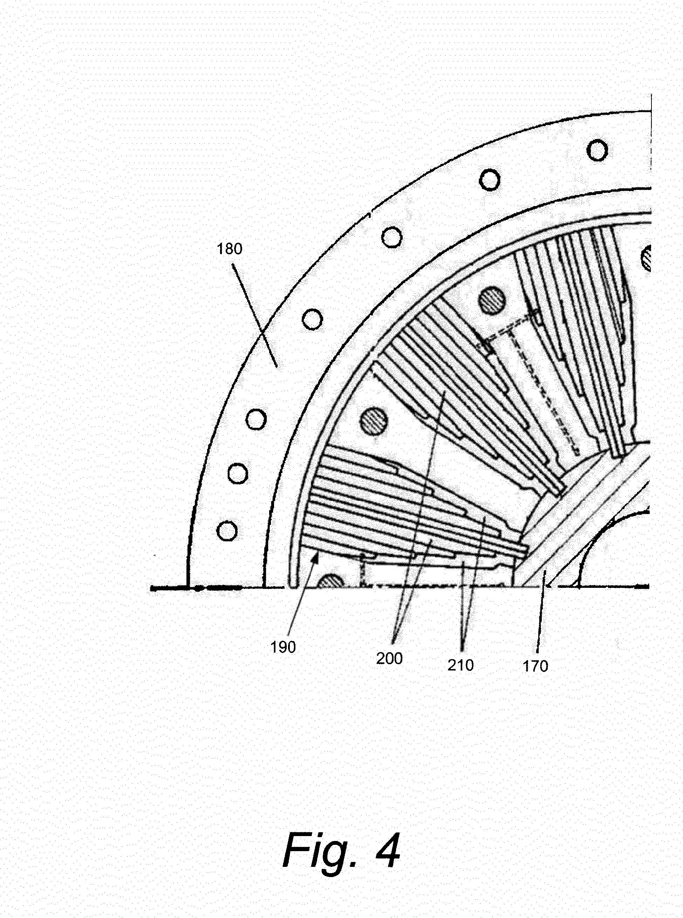

Figs. 3 and 4 show one example of the torsional damping coupling 160 that may be used herein. The torsional damping coupling 160 may include a driving or an inner part 170 and a driven or an outer part 180. The inner part 170 and the outer part 180 may be separated by a number of spring sets 190. Each spring set 190 may include a number of springs 200 therein and a number of oil chambers 210. The springs 200 may be leaf springs. Oil and other types of viscous fluids may be used within the oil chambers 210.

During torque transmission caused by a generator based fault event, the outer part 180 of the torsional damping coupling 160 may rotate relative to the inner part 170 so as to bend the springs 200. Movement of the springs 200 may push the oil or other fluid from one chamber 210 to another. Generally described, hydraulic friction in the oil flow thus slows the relative movement of the inner part 170 and the outer part 180 so as to provide a momentary damping effect. The torsional damping coupling 160 of this example thus provides oil based and spring based damping. A number of torsional damping couplings 160 may be used herein.

The torsional damping coupling 160 and the operation thereof are described herein for purposes of example only. Many other types and configurations of the torsional damping coupling 160 may be available. An example of the torsional damping coupling 160 may be available from Geislinger GmbH of Salzburg, Austria. Such a torsional damping coupling 160 may be shown in DE 19839470 to Geislinger. Similar devices may be used herein. Other components and other configurations may be used herein.

The use of the torsional damping coupling 160 in the gas turbine engine generator system 100 thus may minimize the impact of both minor and major fault events on the turbine 130 and the other components described herein. Specifically, the torsional damping coupling 160 smoothes the transmission of torque to the turbine 130 cause by generator based fault events. Such a reduction in torque may allow overall turbine design requirements to be relaxed. The size, cost, and weight of the turbine 130 thus may be reduced. Moreover, the entire gas turbine engine generator system 100 may be more reliable with longer component lifetime. The torsional damping coupling 160 may be original equipment or part of a retrofit. Although the use of the gas turbine engine 10 has been described herein, the torsional damping coupling 160 may be used with any type of turbo-machinery and the like.

It should be apparent that the foregoing relates only to certain embodiments of the present application and the resultant patent. Numerous changes and modifications may be made herein by one of ordinary skill in the art without departing from the general spirit and scope of the invention as defined by the following claims and the equivalents thereof.

## Claims

1. A gas turbine engine generator system (100), comprising:
a turbine (130);
a generator (150);
wherein the turbine (130) drives the generator (150) via a shaft (140); and
a torsional damping coupling (160) positioned about the shaft (140).

2. The gas turbine engine generator system (100) of claim 1, wherein the torsional damping coupling (160) comprises an inner part (170) and an outer part (180).

3. The gas turbine engine generator system (100) of claim 2, wherein the torsional damping coupling (160) comprises a spring set (190) positioned between the inner part (170) and the outer part (180).

4. The gas turbine engine generator system (100) of claim 3, wherein the spring set (190) comprises a plurality of springs (200) and a plurality of oil chambers (210).

5. The gas turbine engine generator system (100) of any of claims 1 to 4, further comprising a plurality of torsional damping couplings (160).

6. The gas turbine engine generator system (100) of any preceding claim, wherein the torsional damping coupling (160) limits a transmission of torque from the generator (150) to the turbine (130).

7. The gas turbine engine generator system (100) of claim 6, wherein the torsional damping coupling (160) limits the transmission of torque from the generator (150) to the turbine (130) caused by a fault event.

8. The gas turbine engine generator system (100) of any preceding claim, wherein the torsional damping coupling (160) comprises an oil based damper (210).

9. The gas turbine engine generator system (100) of any claims 1 to 8, wherein the torsional damping coupling (160) comprises a spring based damper (200).

10. A method of operating a gas turbine engine generator system (100), comprising:
positioning a torsional damping coupling (160) about a shaft (140) between a generator (150) and a turbine (130);
driving the generator (150) by the turbine (130) via the shaft (140);
generating torque in the generator (150) during a fault event; and
damping a transmission of torque from the generator (150) to the turbine (130) by the torsional damping coupling (160).

11. The method of claim 10, wherein the step of damping a transmission of torque from the generator (150) to the turbine (130) by the torsional damping coupling (160) comprises oil based damping.

12. The method of claim 10 or 11 wherein the step of damping a transmission of torque from the generator (150) to the turbine (130) by the torsional damping coupling (160) comprises creating hydraulic friction.

13. The method of claim 10, wherein the step of damping a transmission of torque from the generator (150) to the turbine (130) by the torsional damping coupling (160) comprises spring based damping.

14. The method of claim 10 or 13, wherein the step of damping a transmission of torque from the generator (150) to the turbine (130) by the torsional damping coupling (160) comprises bending a plurality of spring (200).
